Europäisches Patentamt

European Patent Office

Office européen des brevets

(11) Publication number: **0 093 271**
A1

(12) # EUROPEAN PATENT APPLICATION

(21) Application number: **83103336.0**

(22) Date of filing: **06.04.83**

(51) Int. Cl.³: **A 23 K 1/17**

(30) Priority: **08.04.82 US 366455**

(43) Date of publication of application:
**09.11.83 Bulletin 83/45**

(84) Designated Contracting States:
**BE DE FR GB IT**

(71) Applicant: **THE DOW CHEMICAL COMPANY**
Dow Center 2030 Abbott Road Post Office Box 1967
Midland Michigan 48640(US)

(72) Inventor: **Parenti, Francesco**
8 Via Emilio De Marchi
Milano(IT)

(72) Inventor: **Riley, William Herod**
2683 Mier
Midland Michigan 48640(US)

(72) Inventor: **Shipp Saunders, Edward**
2277 N. Perrine
Midland Michigan 48640(US)

(74) Representative: **De Carli, Elda et al,**
PATENT DEPARTMENT c/o Gruppo Lepetit S.p.A. Via
Durando 38
I-20158 Milano(IT)

(54) **Growth promotion of monogastric animals.**

(57) A method for improving the rate of growth and/or feed conversion efficiency of monogastric animals. In the method, an effective growth-promoting amount of Teichomycin $A_2$ or its physiologically acceptable salt, ester or amide is administered to the animal.

EP 0 093 271 A1

GROWTH PROMOTION OF MONOGASTRIC ANIMALS


Background of the Invention

Historically, many antibiotics have been used in conjunction with animal feed in attempts to promote growth in monogastric animals, e.g., poultry and swine. The use of those antibiotics which are also used in the treatment of humans has not been readily accepted because of the possible development of pathogenic microorganisms resistant to such antibiotics. Additionally, the commercially used growth-promoting antibiotics progressively decline in growth-promoting activity in the later phases of production. The commercially available antibiotics used for growth promotion of monogastric animals, such as penicillin, the tetracyclines and sulfamethazine are thus not highly effective over the entire production period.


Summary of the Invention

It has now been discovered that Teichomycin $A_2$, its physiologically acceptable salts, its physiologically acceptable esters, and its physiologically acceptable amides are effective as growth-promoting agents (growth promoters) in monogastric animals, (that is. agents capable of improving either or both the rate of growth or the feed conversion efficiency of monogastric animals). It appears that Teichomycin A$_2$, and its physiologically acceptable salts, esters and amides selectively alter the balance of normal intestinal microorganisms, favoring those microorganisms which are most beneficial for optimum growth and/or the feed conversion efficiency of the animal. Teichomycin A$_2$ has shown unique growth promotion activity in swine, where a high level of improvement in average daily gain has been demonstrated in both the growing and finishing phases of production. The high level of activity shown by Teichomycin A$_2$ in the finisher phase is not characteristic of the known antibiotic growth promoters. Commercial swine growth promoters such as Aureo S-P 250®* (*a trademark of American Cyanamid Co.) do not show sustained activity over the entire production period and are not efficacious in the finisher phase.

The effectiveness of Teichomycin A$_2$ is a monogastric growth promoter is due to its selective activity against anaerobic and facultative anaerobic bacteria which are normal inhabitants of the gastro-intestinal tract. Teichomycin A$_2$ alters the microflora in such a way as to increase the efficiency of nutrient production and absorption.

The antimicrobial profile of Teichomycin A$_2$ is uniquely different from that of other antimicrobials such as kanamycin, neomycin, dimetridazole, and chloramphenicol which are not active as growth promoting agents for monogastric animals. Teichomycin A$_2$ is highly active against bacteria such as <u>Streptococcus</u> and <u>Clostridium</u> as compared to the non-growth promoting antibiotics.

Compared to commercial monogastric growth promoters, Teichomycin $A_2$ exhibits a unique influence on the proliferation of normal inhabitants of the small intestine and caecum. In the presence of Teichomycin $A_2$, the growth of <u>Streptococcus</u> and <u>Clostridium</u> species is inhibited, in contrast to penicillin which does not inhibit these organisms <u>in</u> <u>vivo</u>.

Teichomycin $A_2$ is described and claimed in U.S. Patent 4,239,751, patented December 16, 1980. The physiologically acceptable salts, physiologically acceptable esters and physiologically acceptable amides of Teichomycin $A_2$ are readily prepared employing procedures well known in the art. Illustrative examples of the physiologically acceptable salts, esters and amides of Teichomycin $A_2$ are further described below.

Teichomycin $A_2$ contains free carboxyl groups and thus exhibits the common property of an organic acid in that it forms salts. Representative of the inorganic bases forming physiologically acceptable cationic salts with Teichomycin $A_2$ are, for example, the alkali metal hydroxides such as lithium hydroxide, sodium hydroxide and potassium hydroxide; the alkali metal carbonates and bicarbonates such as lithium carbonate and sodium bicarbonate; the alkaline earth metal hydroxides and carbonates such as calcium hydroxide and magnesium carbonate; and like inorganic bases.

Illustrative of the organic bases forming physiologically acceptable salts with Teichomycin $A_2$ are the primary, secondary and tertiary $C_1$-$C_4$ lower alkyl and

lower hydroxyalkyl amines such as ethylamine, isopropylamine, diethylamine, methyl-n-butylamine, ethanolamine, and diethanolamine.

The ammonium salts of Teichomycin $A_2$ are prepared with ammonia or various ammonium hydroxides.

Physiologically acceptable esters can readily be prepared by esterification of the carboxyl groups of Teichomycin $A_2$ to give esters such as alkyl esters, cycloalkyl esters and aryl esters. Typical alkyl esters are, for example, methyl, ethyl, isopropyl or butyl esters. Typical cycloalkyl esters are cyclopropyl and cyclohexyl esters. Typical of the aryl esters are those such as the phenyl ester.

Esters can also be made by acylation of one or more of the derivatives described herein having hydroxyl groups. For example, esters are made by acylation using groups such as formyl, acetyl, cyclohexylacetyl and benzoyl groups. Esters such as phosphate esters, can also be prepared from the hydroxyl groups of Teichomycin $A_2$.

Physiologically acceptable amide derivatives of Teichomycin $A_2$ can be prepared employing amines such as ethyl glycine, ethyl amine, diethylamine, N-methyl piperazine, or by employing acids such as acetic or succinic acid.

As used herein the term "physiologically acceptable" when used in conjuction with salts, esters or amides refers to those salts, esters or amides of

Teichomycin $A_2$ which will not cause significant adverse physiological effects when administered to an animal at dosages consistent with the method of the present invention. "Teichomycin $A_2$ or its physiologically acceptable salt, ester or amide" means at least one growth promoter selected from the group consisting of Teichomycin $A_2$, its physiologically acceptable salts, its physiologically acceptable esters and its physiologically acceptable amides. In the method and compositions described herein, either Teichomycin $A_2$ or a physiologically acceptable salt, ester or amide of Teichomycin $A_2$ can be utilized individually or various combinations of Teichomycin $A_2$ and its physiologically acceptable salts, esters and amides can be employed.

The method of the present invention contemplates treating a monogastric animal with one of the compositions described herein.

Teichomycin $A_2$ or its physiologically acceptable salt, ester or amide is administered to the monogastic animal in an amount sufficient to improve the rate of growth and/or the feed conversion efficiency of the animal.

The Teichomycin $A_2$ or its physiologically acceptable salt, ester or amide can be administered to the animal at a rate of from 0.04 to 10 milligrams (mg) of the growth promoter per kilogram (kg) of animal body weight per day, preferably from 0.08 to 6 mg of the growth promoter per kg of animal body weight per day. The exact amount of the growth promoter to be employed will vary depending upon factors such as the species of animal, or the size, weight, age, and health of the animal. For swine, Teichomycin A$_2$ or its physiologically acceptable salt, ester or amide can be administered to the animal at a rate of from 0.04 to 4 mg of the growth promoter per kg of animal body weight per day, preferably from 0.08 to 2 mg of the growth promoter per kg of animal body weight per day. For poultry, a rate of from 0.1 to 10 mg of the growth promoter per kg of animal body weight per day is suitable for administration, with a rate of from 0.2 to 6 mg of the growth promoter per kg of animal body weight per day preferred. In particular cases, the concentration to be administered may be determined by conventional dose titration techniques.

The Teichomycin A$_2$ or its physiologically acceptable salt, ester or amide is preferably administered orally to the monogastric animals as part of their normal food, for example, in admixture with a usual solid feedstuff or in the form of a slow-release feed pellet. The antibiotic material is incorporated into the feed at a concentration of from 1 to 100 parts per million (hereinafter ppm) by weight of the ultimate composition and preferably in the range of from 2 to 50 ppm by weight of the ultimate composition.

For commercial use, it is convenient to provide a feed additive premix, mineral supplement or concentrate containing Teichomycin A$_2$ or its physiologically acceptable salt, ester or amide in a proportion such that a predetermined quantity of the premix or concentrate may be added to a quantity of complete feed. The feed additive premix or concentrate may contain from 0.05% to 80% by weight of Teichomycin A$_2$ or its

physiologically acceptable salt, ester or amide. The premix feed ingredient is a physiologically acceptable carrier such as soybean meal, corn meal or ground corn or other appropriate feed material. Premix ingredients may also include appropriate supplements such as vitamin or mineral supplements.

E. W. Crampton, et al. (Applied Animal Nutrition W. H. Freeman and Company, San Francisco, California, 1969) and D. C. Church (Livestock Feeds and Feeding, distributed by O&B Books, Corvallis, Oregon, 1977) further describe the preparation of normal feedstuffs and the process of admixing compounds such as Teichomycin $A_2$, or its physiologically acceptable salts, esters or amides with feed compositions, premixes and concentrates and are incorporated herein by reference.

Teichomycin $A_2$ can also be utilized in admixture with the mycelium resulting from the culture medium in which the Teichomycin $A_2$ is produced. This mycelium mixture may optionally be combined with appropriate feed ingredients such as those described above to obtain suitable premixes, concentrates or complete feeds.

The method of the present invention also contemplates treating monogastric animals, with one of the compositions containing Teichomycin $A_2$ or its physiologically acceptable salt, ester or amide in combination with one or more additives such as coccidiostats, antibiotics, minerals, vitamins or any other physiologically beneficial agents employed in animal husbandry.

Description of the Preferred Embodiments

The following examples describe representative embodiments contemplated by the inventors of carrying out their invention. The examples are intended to further illustrate the invention but are not to be construed as a limitation thereon.

In trials with swine, the following method was used with the indicated results.

Example 1

Crossbred weanling barrows weighing approximately 13.6 kilograms (kg) and of similar background were purchased. All pigs were eartagged for identification. From this number, 96 pigs of uniform weight, type and health were selected for actual use in the trial.

These 96 pigs were blocked into 4 weight groups, heavy, medium heavy, medium light, and light. Each weight group was randomly assigned to a block of 8 pens. Treatments were randomly allotted to the 8 pens within each of the blocks. Each treatment appeared an equal number of times in each block, and each block contained all treatments, giving a randomized complete block design (see following Table 1).

## TABLE 1

### RANDOMIZED COMPLETE BLOCK

| Treatment | Growth Promoter Level | No. Reps./Block* Block | A | B | C | D | Total No. Reps. | No. Pigs/Rep. | No. Pigs/Treatment |
|---|---|---|---|---|---|---|---|---|---|
| 1. Control | 0 | | 2 | 2 | 2 | 2 | 8 | 3 | 24 |
| 2. Teichomycin $A_2$ | 5 Grams/Ton | | 1 | 1 | 1 | 1 | 4 | 3 | 12 |
| 3. Teichomycin $A_2$ | 15 Grams/Ton | | 1 | 1 | 1 | 1 | 4 | 3 | 12 |
| 4. Aureo S·P 250®** | 250 Grams/Ton*** | | 2 | 2 | 2 | 2 | 8 | 3 | 24 |
| 5. Lincomycin | 40 Grams/Ton**** | | 2 | 2 | 2 | 2 | 8 | 3 | 24 |
| TOTALS | | | 8 | 8 | 8 | 8 | 32 | 15 | 96 |

*Block A:  Medium Heavy
 Block B:  Medium Light
 Block C:  Light
 Block D:  Heavy

**Aureo S·P 250® (Trademark of American Cyanamid Co.)

***Provided by 2.3 kg/Ton of commercial premix which gives 100 grams of Aureomycin, 100 grams of Sulfamethazine and 50 grams of Penicillin per ton of feed.

****Provided by 0.9 kg/Ton of Lincomix® 20 (Trademark of TUCO, Division of Upjohn Co.).

Two basal ration formulations were used in this trial: a 16% Grower from 0 - 56 days, and a 14% Finisher from 56 days to market weight at 112 days. These ration formulations are shown in the following Tables 2 and 3. The growth promoters tested were added to the basal formulations at the levels shown in Table 1 to make the 5 treatment rations.

TABLE 2

## RATION FORMULATION: 16% PIG GROWER

| Ingredient | % | Kg/Ton | % DM[1] | Kg DM/Ton | % Prot.[2] | % Dig. Prot.[3] | % TDN[4] | % Ca | % P | % NaCl |
|---|---|---|---|---|---|---|---|---|---|---|
| Ground Corn (9%) | 75.00 | 680.40 | 66.75 | 605.56 | 6.675 | 5.325 | 61.50 | 0.015 | 0.232 | |
| Soybean Meal (44%) | 22.25 | 201.85 | 20.02 | 181.67 | 9.750 | 8.766 | 17.58 | 0.060 | 0.140 | |
| Dicalcium Phosphate | 1.00 | 9.07 | 0.96 | 8.71 | | | | 0.222 | 0.179 | |
| Ground Limestone | 1.00 | 9.07 | 1.00 | 9.07 | | | | 0.338 | | |
| Trace Mineralized Salt | 0.50 | 4.54 | | | | | | | | 0.50 |
| Vitamin Premix | 0.25 | 2.27 | | | | | | | | |
| TOTAL | 100.00 | 907.20 | 88.73 | 805.01 | 16.425 | 14.091 | 79.08 | 0.635 | 0.551 | 0.50 |

[1]DM = Dry matter
[2]Prot. = Protein
[3]Dig. Prot. = Digestible protein
[4]TDN = Total digestible nutrients

## TABLE 3

### RATION FORMULATION:   14% PIG FINISHER

| Ingredient | % | Kg/Ton | % DM[1] | Kg DM/Ton | % Prot.[2] | % Dig. Prot.[3] | % TDN[4] | % Ca | % P | % NaCl |
|---|---|---|---|---|---|---|---|---|---|---|
| Ground Corn (9%) | 77.50 | 737.10 | 72.31 | 656.02 | 7.23 | 5.77 | 66.62 | 0.016 | 0.252 | |
| Soybean Meal (44%) | 20.00 | 147.42 | 14.62 | 132.68 | 7.12 | 6.40 | 12.84 | 0.044 | 0.102 | |
| Dicalcium Phosphate | 1.00 | 9.07 | 0.96 | 8.71 | | | | 0.222 | 0.179 | |
| Ground Limestone | 0.75 | 6.80 | 0.75 | 6.80 | | | | 0.254 | | |
| Trace Mineralized Salt | 0.50 | 4.54 | | | | | | | | 0.50 |
| Vitamin Premix | 0.25 | 2.27 | | | | | | | | |
| TOTAL | 100.00 | 907.20 | 88.64 | 804.21 | 14.35 | 12.17 | 79.46 | 0.536 | 0.533 | 0.50 |

[1]DM = Dry Matter
[2]Prot. = Protein
[3]Dig. Prot. = Digestible Protein
[4]TDN = Total digestible nutrients

The pigs were allowed a 5-7 day adjustment period to recover from the stress of trucking and to become adapted to the basal ration, watering method and surroundings. The pigs were housed (3/pen) in 1.2 meters (m) x 2.4 m enclosed pens. Temperature and humidity were controlled, the temperature being maintained at 19-21°C. A concrete slab floor with no bedding was provided. The floor was washed down once each day. The pigs were group fed, 3/pen. Feed was available at all times from a 22.7 kg capacity Brower Single Door Hog Feeder. The ration was in the physical form of a meal. The feeding space allowed was 3 pigs/self feeder opening. Water was provided by a continuous nipple type waterer.

A suitable carrier, e.g., corn meal containing about 1.5% growth promoter was added to 4.5 kg of ground corn to form a premix. The premix was then added to the quantity of feed to be mixed and the mix completed. Batch mixes of 227 to 454 kg (depending on age and feed intake of the pigs) of each treatment diet was made in a 454 kg capacity Marion Mixer. Mixing time was 8 minutes. Samples of each batch mix were taken for analysis. Each mix was weighed and put into 22.7 kg bags which were tagged with the date, treatment number, growth promoter concentration and the pen treatment. Bagged feed was stored in an air-conditioned feed holding room.

Table 4 summarizes growth results over a 112 day period. The pigs were weighed on day zero prior to treatment initiation and on the 28th, 56th, 84th and 112th days.

## TABLE 4

### 0-112 DAY SWINE TRIAL

| Compound and Level (ppm) | Average Daily Gain (kg/day) | Average Daily Gain Expressed As % of Control | $CV^a$ | Feed Conversion Efficiency (kg Feed/kg Gain) | Feed Conversion Efficiency As % of Control[b] |
|---|---|---|---|---|---|
| Control | 0.721 | – | 8.6 | 3.27 | – |
| Aureo S·P 250® --250 | 0.748 | 104 | 9.2 | 3.33 | 102 |
| Lincomycin --40 | 0.762 | 106 | 5.7 | 3.32 | 102 |
| Teichomycin $A_2$ --5 | 0.785 | 109* | 3.8 | 3.22 | 98 |
| Teichomycin $A_2$ --15 | 0.789 | 109* | 6.3 | 3.14 | 96 |

*statistical significance at the 95% confidence level

a)CV = coefficient of variation = ( $\dfrac{\text{standard deviation of replications}}{\text{mean of replications}}$ x 100)

b)% of control = $\dfrac{\text{treated}}{\text{control}}$ x 100; a number less than 100 represents an improvement in Feed Conversion Efficiency

Table 5 summarizes results during individual weighing periods.

## TABLE 5

### SWINE GROWTH PROMOTION DURING INDIVIDUAL WEIGHING PERIODS

| | Average Daily Gain (% Control) | | | |
| Treatment | 0-28 Days | 28-56 Days | 56-84 Days | 84-112 Days |
|---|---|---|---|---|
| Teichomycin A$_2$ | | | | |
| 5 ppm[a] | 106 | 112* | 108* | 108* |
| 15 ppm[a] | 109* | 109* | 109* | 109* |
| Aureo S·P 250® 250 ppm[a,b] | 106 | 106 | 104 | 102 |
| Lincomycin 40 ppm[a] | 105 | 105 | 104 | 104 |

*Statistical significance at the 95% confidence level
a) Concentration in the feed
b) 100 ppm of Aureomycin, 100 ppm of Sulfamethazine and 50 ppm of Penicillin

The data in Table 4 show that Teichomycin A$_2$ improved the rate of weight gain and the feed conversion efficiency of swine during the 112 day production trial. In addition, Teichomycin $A_2$ showed a comparable level of improvement in rate of weight gain during both the growing and finishing phases of production (Table 5). The superiority of Teichomycin $A_2$ in improving the rate of weight gain is seen by comparing its activity with that of the commercial feed additives Aureo S·P 250® and lincomycin. The high level of activity of Teichomycin $A_2$ in the finishing phase (56-112 days) is unique and is clearly demonstrated when compared with both commercial products.

The following data summarize feeding trials with young chickens.

### Example 2

#### A. Methods and Materials

| | |
|---|---|
| Test Animals - | Day-old broiler chicks (Hubbard White Rock Cockerels), preconditioned for 3 days on certified Purina chick starter[1] prior to initiating treatment |
| Replications - | 8 Replications of 2 chicks/rep for each treatment |
| Test Diet - | Rye broiler diet[2] |
| Testing Period - | 0-11 days |
| Measurements: Body Weights - | Individual body weight measurement on experimental days 0 and 11. |
| Feed Consumption - | By pen (2 chicks/pen) for the 0-11 day testing period |
| Feeding - | Feed and water available ad libitum |
| Lighting - | Continuous lighting during entire trial |

Temperature -                34.⁻°C

[1]Commercial Purina Lab Chick Chow S-G diet
        Chemical Analysis:

|  | % |
|---|---|
| Crude protein | 21.6 |
| Mixed Amino Acids | 11.26 |
| Fat | 4.4 |
| Fiber | 3.4 |
| Total Digestible Nutrients | 80.5 |
| Ash | 6.0 |

[2]Rye-broiler diet consisting of 1/3 Purina Lab Chick
    Chow S-G and 2/3 Rye Basal Mix.
        Rye Basal Mix Ingredients:

|  | % |
|---|---|
| Rye | 37.0 |
| Corn | 18.0 |
| Soybean Meal | 27.0 |
| Herring Fish Meal | 5.0 |
| Meat and Bone Meal | 5.0 |
| Dried Whey Product | 1.0 |
| Dehydrated Alfalfa | 1.25 |
| Corn Oil | 4.0 |
| Salt | 0.22 |
| Dicalcium Phosphate | 0.5 |
| Limestone | 0.67 |
| Vitamin Premix | 0.25 |
| Trace Mineral Premix | 0.05 |
| DL-Methionine | 0.06 |
|  | 100.00 |

E. Effect of Teichomycin $A_2$ (TeA$_2$) on Growth in Young Chickens (Average of Two Trials)

TABLE 6

| Treatment | ADG[1] (Grams/Day) | % Control | F/G[2] Ratio | % Control |
|---|---|---|---|---|
| Control | 22.6 | - | 1.53 | - |
| TeA$_2$ 0.5 ppm | 23.2 | 103 | 1.505 | 98 |
| " 1.0 " | 23.1 | 102 | 1.53 | 100 |
| " 2.5 " | 23.7 | 105 | 1.495 | 98 |
| " 5.0 " | 24.3 | 108[3] | 1.52 | 99 |
| " 12.5 " | 24.0 | 106[3] | 1.49 | 97 |
| " 25 " | 24.5 | 108[4] | 1.44 | 94 |
| " 50 " | 24.6 | 109[4] | 1.435 | 94 |
| Penicillin 50 ppm | 23.9 | 106 | 1.475 | 96 |
| Virginiamycin 50 ppm | 24.0 | 106[3] | 1.51 | 99 |

[1]ADG = Average daily gain

[2]F/G = Feed to gain ratio, (grams feed/grams gain): a number less than 100 represents an improvement in F/G

[3]Statistical significance at the 95% confidence level

[4]Statistical significance at the 99% confidence level

The data show that levels of Teichomycin $A_2$ from 0.5 to 50 ppm in the diet improved the rate of gain of young chickens. Maximum improvement was seen between 5 and 50 ppm of Teichomycin $A_2$ in the diet. Teichomycin $A_2$ also improved the feed conversion efficiency (i.e., lowered F/G ratio) at several different concentrations in the diet.

WHAT IS CLAIMED IS:

1. A method for improving the rate of growth or the feed conversion efficiency of a monogastric animal which comprises administering to said animal at least one growth promoter selected from the group consisting of Teichomycin $A_2$, its physiologically acceptable salts, its physiologically acceptable esters and its physiologically acceptable amides.

2. The method of Claim 1 wherein the growth promoter is incorporated into a feed composition at a concentration of from 1 to 100 parts per million by weight.

3. The method of Claim 1 wherein the growth promoter is incorporated into a feed composition at a concentration of from 2 to 50 parts per million by weight.

4. The method of Claim 1 wherein the growth promoter is administered to said animal at a rate of from 0.04 to 10 milligrams of the growth promoter per kilogram of body weight per day.

5. The method of Claim 1 wherein the growth promoter is administered to said animal at a rate of from 0.08 to 6 milligram of the growth promoter per kilogram of body weight per day.

6. The method of Claim 4 or 5 wherein the monogastric animals are swine or poultry.

7. The method of Claim 2, 3, 4 or 5 wherein the growth promoter is Teichomycin $A_2$.

8. A method as claimed in Claim 1 wherein the animals are pigs or chickens, the growth promoter is Teichomycin $A_2$ which is administered in a feed composition containing from 2 to 50 parts per million by weight of Teichomycin $A_2$.

9. A growth-promoting mixture of the mycelium from the culture medium in which Teichomycin $A_2$ is produced and Teichomycin $A_2$.

10. The mixture of Claim 9 combined with feed ingredients.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| D,A | US-A-4 239 751 (C. CORONELLI et al.) <br> * Claim 1 * | | A 23 K 1/17 |
| A | GB-A-2 057 873 (BRISTOL MYERS CO.) <br> * Abstract * | | |

---

**TECHNICAL FIELDS SEARCHED (Int Cl ³)**

A 23 K 1/00
C 07 G 11/00

---

The present search report has been drawn up for all claims

| Place of search <br> BERLIN | Date of completion of the search <br> 27-06-1983 | Examiner <br> SCHULTZE D |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82